# EUROPÄISCHE PATENTANMELDUNG

(11) **EP 1 770 384 A2**
(43) Veröffentlichungstag der Anmeldung: **04.04.2007**
(21) Anmeldenummer: 06120631.4
(22) Anmeldetag: 14.09.2006
(51) Int. Cl.: G01M 15/11, F02D 41/14

(54) **Verfahren und Vorrichtung zum Erkennen eines Verbrennungsaussetzers**

(30) Priorität: 30.09.2005 DE 102005046953
(71) Anmelder: SIEMENS AKTIENGESELLSCHAFT, 80333 München (DE)
(72) Erfinder: Beer, Johannes, 93051, Regensburg (DE); Kainz, Josef, 94330, Salching (DE)

(57) **Zusammenfassung**

Eine Brennkraftmaschine hat mehrere Zylinder, die in mindestens zwei Gruppen jeweils einem Abgastrakt zugeordnet sind. In jedem Abgastrakt ist ein Abgaskatalysator und stromaufwärts des Abgaskatalysators eine Abgassonde angeordnet. Zum Erkennen eines Verbrennungsaussetzers (MISF) in einem Brennraum eines der Zylinder (Z1 bis Z8) werden folgende Schritte durchgeführt. Ein Verbrennungsaussetzer (MISF) wird in einem Zylinder erkannt und einer der Gruppen der Zylinder zugeordnet abhängig von mindestens einer Betriebsgröße der Brennkraftmaschine. Eine Fehlerursache für den Verbrennungsaussetzer wird ermittelt, die an einem Einspritzsystem der Brennkraftmaschine oder einem Zündsystem der Brennkraftmaschine liegt, abhängig von einer ersten Regeldifferenz (D_LAM) einer Lambdaregelung, die der Gruppe der Zylinder zugeordnet ist, der der Verbrennungsaussetzer zugeordnet ist, und ferner abhängig von einer zweiten Regeldifferenz (D_LAM) einer weiteren Lambdaregelung, die einer Gruppe der Zylinder zugeordnet ist, der der Verbrennungsaussetzer nicht zugeordnet ist.

## Beschreibung

Die Erfindung betrifft ein Verfahren und eine Vorrichtung zum Erkennen eines Verbrennungsaussetzers in einem Brennraum eines Zylinders einer Brennkraftmaschine mit mindestens einem Zylinder und einem Abgastrakt, in dem ein Abgaskatalysator und stromaufwärts des Abgaskatalysators eine Abgassonde angeordnet sind.

Immer strengere gesetzliche Vorschriften bezüglich zulässiger Schadstoffemissionen von Kraftfahrzeugen, in denen Brennkraftmaschinen angeordnet sind, machen es erforderlich, die Schadstoffemissionen beim Betrieb der Brennkraftmaschine so gering wie möglich zu halten. Dies kann zum einen erfolgen, indem die Schadstoffemissionen verringert werden, die während der Verbrennung des Luft/Kraftstoff-Gemisches in dem jeweiligen Zylinder der Brennkraftmaschine entstehen. Zum andern sind in Brennkraftmaschinen Abgasnachbehandlungssysteme im Einsatz, die die Schadstoffemissionen, die während des Verbrennungsprozesses des Luft/Kraftstoff-Gemisches in den jeweiligen Zylindern erzeugt werden, in unschädliche Stoffe umwandeln. Zu diesem Zweck werden Katalysatoren eingesetzt, die Kohlenmonoxid, Kohlenwasserstoffe und Stickoxide in unschädliche Stoffe umwandeln. Sowohl das gezielte Beeinflussen des Erzeugens der Schadstoffemissionen während der Verbrennung als auch das Umwandeln der Schadstoffkomponenten mit einem hohen Wirkungsgrad durch einen Abgaskatalysator setzen ein sehr präzise eingestelltes Luft/Kraftstoff-Verhältnis in dem jeweiligen Zylinder voraus.

Aus dem Fachbuch, "Handbuch Verbrennungsmotor", Herausgeber Richard von Basshuysen, Fred Schäfer, 2. Auflage, Vieweg & Sohn Verlagsgesellschaft mbH, Juni 2002, Seiten 526 - 528, ist eine Lambdaregelung bekannt mit einer linearen Lambdasonde, die stromaufwärts eines Abgaskatalysators angeordnet ist, und einer binären Lambdasonde, die stromabwärts des Abgaskatalysators angeordnet ist. Ein Lambdasollwert wird mittels eines Filters gefiltert, das Gaslaufzeiten und das Sensorverhalten berücksichtigt. Der so gefilterte Lambdasollwert ist die Führungsgröße eines PII²D-Lambdareglers, dessen Stellgröße eine Einspritzmengenkorrektur ist. Ein aus dem Messsignal der linearen Lambdasonde abgeleiteter Lambdaistwert bildet zusammen mit dem gefilterten Lambdasollwert die Regeldifferenz des Lambdareglers.

Darüber hinaus ist bei modernen Brennkraftmaschinen eine Diagnose während des Betriebs der Brennkraftmaschine erforderlich. In diesem Zusammenhang wird überwacht, ob Verbrennungsaussetzer auftreten. Derartige Verbrennungsaussetzer können verschiedene Ursachen haben, so zum Beispiel einen Fehler in dem Einspritzsystem der Brennkraftmaschine beispielsweise hervorgerufen durch ein ungewolltes Nichtöffnen des Einspritzventils. Dies kann dann zu einem fehlenden Zumessen von Kraftstoff führen und somit eine Zündung des in dem Zylinder befindlichen Gemisches verhindern. Die Fehlerursache kann jedoch auch durch einen Fehler an einem Zündsystem der Brennkraftmaschine hervorgerufen werden. Werden im Rahmen der Diagnose derartige Verbrennungsaussetzer erkannt, so kann dies zu einem Fehlereintrag führen und zu einer Aufforderung an den Fahrer des Fahrzeuges in dem die Brennkraftmaschine angeordnet ist, eine Werkstatt aufzusuchen oder auch lediglich einen Fehlereintrag verursachen, der im Rahmen des nächsten Kundendienstes ausgelesen wird. Für eine möglichst einfache Behebung des Fehlers ist es wünschenswert, wenn eine Lokalisierung der Fehlerquelle erfolgt.

Aus der DE 199 13 746 C2 ist ein Verfahren zum Erkennen von abgasverschlechternden und katalysatorschädigenden Aussetzern bei Verbrennungsmotoren bekannt. Eine Lambdasondenspannung einer nach einem Abgaskatalysator angeordneten Lambdasonde wird bezogen auf einen erkannten Verbrennungsaussetzer ermittelt. Der Verbrennungsaussetzer kann beispielsweise mittels einer Untersuchung der Laufunruhe erkannt werden. In Abhängigkeit von der Lambdasondenspannung wird dann auf eine Aussetzerart in Folge einer Fehlzündung, einer Fehleinspritzung oder eines anderen Fehlers geschlossen. Die Fehlerart kann jedoch nur bei sehr häufig auftretenden Verbrennungsaussetzern auf diese Weise erkannt werden, da sie stark abhängig ist von der Sauerstoffspeicherfähigkeit des Katalysators.

Ferner sind Brennkraftmaschinen bekannt mit beispielsweise acht Zylindern, die jeweils Gruppen von vier Zylindern einer Abgasbank zugeordnet sind und bei denen jeder Abgasbank ein eigener Abgastrakt mit einem eigenen Abgasnachbehandlungssystem zugeordnet ist.

Die Aufgabe der Erfindung ist es, ein Verfahren und eine Vorrichtung zu schaffen die beziehungsweise das ein präzises Ermitteln einer Fehlerursache des Verbrennungsaussetzers ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich gemäß eines ersten Aspekts aus durch ein Verfahren und eine entsprechende Vorrichtung zum Erkennen eines Verbrennungsaussetzers in einem Brennraum eines Zylinders einer Brennkraftmaschine mit mehreren Zylindern, die in mindestens zwei Gruppen jeweils einem Abgastrakt zugeordnet sind. In jedem Abgastrakt ist ein Abgaskatalysator und stromaufwärts des Abgaskatalysators eine Abgassonde angeordnet. Ein Verbrennungsaussetzer in einem der Zylinder wird erkannt, abhängig von mindestens einer Betriebsgröße der Brennkraftmaschine, und einer der Gruppen der Zylinder zugeordnet. Eine Fehlerursache für den Verbrennungsaussetzer wird ermittelt, die an einem Einspritzsystem der Brennkraftmaschine oder an einem Zündsystem der Brennkraftmaschine liegt, abhängig von einer ersten Regeldifferenz einer Lambdaregelung, die der Gruppe der Zylinder zugeordnet ist, der der Verbrennungsaussetzer zugeordnet ist, und ferner abhängig von einer zweiten Regeldifferenz einer weiteren Lambdaregelung, die einer Gruppe der Zylinder zugeordnet ist, der der Verbrennungsaussetzer nicht zugeordnet ist.

Gemäß des ersten Aspekts nützt die Erfindung die Erkenntnis, dass Einflüsse beim Ermitteln der Fehlerursache, die nicht durch Verbrennungsaussetzer hervorgerufen sind und die gegebenenfalls zu einem fehlerhaften Schluss auf die Fehlerursache führen können auf diese Weise verringert werden können, da sie sich sowohl im Hinblick auf die Gruppe der Zylinder auswirken, der der Verbrennungsaussetzer zugeordnet ist, als auch auf diejenige Gruppe der Zylinder, der der Verbrennungsaussetzer nicht zugeordnet ist. Insbesondere kann beispielsweise im Falle eines Schätzwertes für einen Luftmassenstrom in die Zylinder der Brennkraftmaschine oder weiterer Lastgrößen, die mittels eines dynamischen physikalischen Modells eines Ansaugtrakts der Brennkraftmaschine ermittelt sind, ein Einfluss einer fehlerbehafteten Modellierung verringert werden. Darüber hinaus kann bezüglich des ersten Aspekts bei niedrigen Verbrennungsaussetzerraten präzise die Fehlerursache zugeordnet werden.

Gemäß eines zweiten Aspekts zeichnet sich die Erfindung aus durch ein Verfahren und eine entsprechende Vorrichtung, die sich von denjenigen gemäß des ersten Aspekts dadurch unterscheiden, dass die Fehlerursache für den Verbrennungsaussetzer ermittelt wird abhängig von einem ersten Kennwert, der abhängig von der Stellgröße der Lambdaregelung ermittelt wird, die der Gruppe der Zylinder zugeordnet ist, der der Verbrennungsaussetzer zugeordnet ist, und die ferner abhängig von einem zweiten Kennwert ermittelt wird, der abhängig von der Stellgröße der Lambdaregelung ermittelt wird, die einer Gruppe der Zylinder zugeordnet ist, der der Verbrennungsaussetzer nicht zugeordnet ist.

Gemäß des zweiten Aspekts der Erfindung wird die Erkenntnis genutzt, dass der erste Kennwert durch den Verbrennungsaussetzer beeinflusst wird, während der zweite Kennwert nicht durch den Verbrennungsaussetzer beeinflusst wird. Durch das Einwirken von Störeinflüssen auf beide Kennwerte kann durch das abhängige Ermitteln der Fehlerursache abhängig von dem ersten und zweiten Kennwert der Einfluss der Störeinflüsse verringert oder sogar eliminiert werden und so die Fehlerursache besonders verlässlich bestimmt werden. Insbesondere kann auch hier im Falle eines Schätzwertes für beispielsweise einen Luftmassenstrom in die Zylinder der Brennkraftmaschine oder einer sonstigen Lastgröße, die mittels eines dynamischen physikalischen Modells eines Ansaugtrakts ermittelt sind, ein Einfluss einer fehlerbehafteten Modellierung vermindert werden. Insbesondere im Falle einer hohen Verbrennungsaussetzerrate kann so präzise die Fehlerursache zugeordnet werden.

Eine Kombination der ersten und zweiten Aspekte der Erfindung hat den Vorteil, dass sowohl bei niedrigen als auch bei hohen Verbrennungsaussetzerraten die Fehlerursache sehr präzise zugeordnet werden kann.

Gemäß einer vorteilhaften Ausgestaltung der Erfindung wird der erste beziehungsweise zweite Kennwert derart ermittelt, dass sie repräsentativ sind für einen Integralanteil der Stellgröße der jeweiligen Lambdaregelung. In diesem Zusammenhang wird die Erkenntnis genutzt, dass der Integralanteil repräsentativ ist für einen stationären Reglereingriff der jeweiligen Lambdaregelung, der wiederum charakteristisch ist für das Auftreten von Verbrennungsaussetzern, insbesondere mit einer hohen Verbrennungsaussetzerrate.

In diesem Zusammenhang ist es vorteilhaft, wenn der erste beziehungsweise zweite Kennwert abhängig von einer gleitenden Mittelwertbildung der Stellgröße der jeweiligen Lambdaregelung ermittelt wird. So kann der stationäre Regeleingriff besonders einfach ermittelt werden.

Gemäß einer weiteren vorteilhaften Ausgestaltung der Erfindung wird die Fehlerursache ermittelt abhängig von einem ersten Trimmkennwert, der abhängig von einer Stellgröße eines Trimmreglers ermittelt wird, der der Gruppe der Zylinder zugeordnet ist, der der Verbrennungsaussetzer zugeordnet ist, und ferner abhängig von einem zweiten Trimmkennwert, der abhängig von einer Stellgröße eines Trimmreglers ermittelt wird, der der Gruppe der Zylinder zugeordnet ist der der Verbrennungsaussetzer nicht zugeordnet ist. Auf diese Weise kann die Fehlerursache so besonders korrekt zugeordnet werden, insbesondere bei mittleren und hohen Verbrennungsaussetzerraten. Ein Trimmregler zeichnet sich dadurch aus, dass seine Stellgröße abhängig von einem Messsignal einer Abgassonde ermittelt wird, die stromabwärts des jeweiligen Abgaskatalysators angeordnet ist und so insbesondere ein sich über die Betriebsdauer der Brennkraftmaschine änderndes Verhalten der jeweiligen Abgassonde stromaufwärts des Abgaskatalysators kompensiert werden kann.

Gemäß einer weiteren vorteilhaften Ausgestaltung der Erfindung wird die Fehlerursache ermittelt abhängig von einem Sollwert des Luft/Kraftstoff-Verhältnisses, der der Gruppe der Zylinder zugeordnet ist, der der Verbrennungsaussetzer zugeordnet ist. Bevorzugt handelt es sich bei dem Sollwert in diesem Zusammenhang um denjenigen, bei dem Gaslaufzeiten und Sondendynamik der Abgassonde stromaufwärts des Abgaskatalysators und gegebenenfalls ein Verhalten des Abgaskatalysators berücksichtigt sind. Auf diese Weise kann die Fehlerursache insbesondere auch in einem Volllastbetrieb der Brennkraftmaschine oder im Zusammenhang mit einem Anfetten des der Brennkraftmaschine zugeführten Luft/Kraftstoff-Gemisches zum Schutz des Abgaskatalysators sehr präzise zugeordnet werden.

Darüber können auch Störeinflüsse durch eine aufgeprägte Zwangsanregung bei der Lambdaregelung, die sich ansonsten als Störgrößen im Hinblick auf das Ermitteln der Fehlerursache auswirken können, verringert oder eliminiert werden.

Gemäß einer weiteren vorteilhaften Ausgestaltung der Erfindung wird die Fehlerursache ermittelt abhängig von einem zylinderspezifischen Laufunruhewert, der dem Zylinder zugeordnet ist, bei dem der Verbrennungsaussetzer erkannt wurde, und abhängig von weiteren zylinderspezifischen Laufunruhewerten die anderen Zylindern zugeordnet sind. Auf diese Weise kann im besonderen bei sporadischen Verbrennungsaussetzern, deren Häufigkeit mit abnehmender Kraftstoffmenge zunimmt, besonders präzise die Fehlerursache zugeordnet werden, wenn sie in dem Einspritzsystem liegt. In diesem Zusammenhang wird die Erkenntnis genutzt, dass sich bei dieser Fehlerursache, die auch als Low-Flow bezeichnet wird, auch in Zeitpunkten oder Betriebszuständen, bei denen kein oder fast kein Verbrennungsaussetzer auftritt, die Laufunruhe im Vergleich zu weiteren zylinderspezifischen Laufunruhewerten, die anderen Zylindern zugeordnet sind deutlich verändert ist, auch wenn ihr absoluter Wert noch nicht denjenigen erreicht hat, der für einen Verbrennungsaussetzer charakteristisch ist.

Gemäß einer weiteren vorteilhaften Ausgestaltung der Erfindung wird die Fehlerursache ermittelt abhängig von einer zylinderspezifischen Funkenbrenndauer einer zugeordneten Zündkerze, die dem Zylinder zugeordnet ist, bei dem der Verbrennungsaussetzer erkannt wurde, und abhängig von weiteren zylinderspezifischen Funkenbrenndauern anderer Zündkerzen, die anderen Zylindern zugeordnet sind. Auf diese Weise kann insbesondere bei Betriebspunkten der Brennkraftmaschine mit geringer Zylinderfüllung die Fehlerursache deutlich präziser zugeordnet werden. Insbesondere kann so eine Fehlerursache in dem Zündsystem besonders präzise ermittelt werden. Dies beruht auf der Erkenntnis, dass insbesondere bei den Betriebspunkten kleiner Zylinderfüllung häufig Abgaspakete, die den einzelnen Zylindern zugeordnet sind bei Erreichen der stromaufwärtigen Abgassonde schon weitgehend mit Abgaspaketen anderer Zylinder vermischt sind. Dies hat dann jedoch zur Folge, dass eine zylinderindividuelle Auswirkung von tatsächlich aufgetretenen Verbrennungsaussetzern in einem der Zylinder sich weniger charakteristisch im Hinblick auf die Zuordnung zu den jeweiligen Zylinder auf sowohl die erste Regeldifferenz der Lambdaregelung auswirkt, die der Gruppe der Zylinder zugeordnet ist, der der Verbrennungsaussetzer zugeordnet ist, als auch sich weniger charakteristisch auf die Stellgröße der Lambdaregelung auswirkt, die der Gruppe der Zylinder zugeordnet ist, der der Verbrennungsaussetzer zugeordnet ist.

Gemäß einer weiteren vorteilhaften Ausgestaltung der Erfindung wird die Fehlerursache durch Auswertung einer Mehrzahl an erkannten Verbrennungsaussetzern ermittelt, die der Gruppe der Zylinder zugeordnet ist, der der Verbrennungsaussetzer zugeordnet ist. So können statistische Schwankungen, insbesondere ein Rauschen, weggefiltert werden und zwar mit einer hohen Wahrscheinlichkeit und so die Sicherheit einer korrekten Zuordnung der Fehlerursache erhöht werden.

In diesem Zusammenhang ist es besonders vorteilhaft, wenn die Anzahl der Mehrzahl an erkannten Verbrennungsaussetzern abhängt von einer Drehzahl und/oder einer Lastgröße. Auf diese Weise kann dann in verschiedenen Betriebsbereichen der Brennkraftmaschine die Zuordnung der Fehlerursache besonders präzise erfolgen.

Gemäß einer weiteren vorteilhaften Ausgestaltung der Erfindung wird die Fehlerursache durch Auswertung der Mehrzahl an erkannten Verbrennungsaussetzern ermittelt, die während einer vorgegebenen Zeitdauer erkannt wurden. Auch so kann eine besonders präzise Zuordnung auf einfache Weise erfolgen.

Gemäß einer weiteren vorteilhaften Ausgestaltung der Erfindung hängt die vorgegebene Zeitdauer ab von der Drehzahl und/oder einer Lastgröße. Auch so kann in verschiedenen Betriebspunkten eine besonders präzise Zuordnung der Fehlerursache erfolgen.

Gemäß einer weiteren vorteilhaften Ausgestaltung der Erfindung wird die Fehlerursache ermittelt abhängig von einer Verbrennungsaussetzerrate eines jeweiligen Zylinders, der der Gruppe der Zylinder zugeordnet ist, der der Verbrennungsaussetzer zugeordnet ist, und/oder einer Sondenalterung der Abgassonde, die der Gruppe der Zylinder zugeordnet ist, der der Verbrennungsaussetzer zugeordnet ist. Auf diese Weise kann eine besonders zuverlässige Zuordnung der Fehlerursache gewährleistet werden und dies insbesondere über eine lange Betriebsdauer der Brennkraftmaschine.

Ausführungsbeispiele der Erfindung sind im Folgenden anhand der schematischen Zeichnungen näher erläutert.

Es zeigen:
- Figur 1: eine Brennkraftmaschine,
- Figur 2: ein Blockdiagramm eines Teils einer Steuervorrichtung der Brennkraftmaschine gemäß Figur 1,
- Figur 3: ein Ablaufdiagramm eines Programms zum Erkennen von Verbrennungsaussetzern,
- Figuren 4 bis 8: Berechnungsvorschriften für erste bis vierte Residuen beziehungsweise eines Zündresiduums,
- Figur 9 A - D: Signalverläufe und
- Figur 10: Berechnungsvorschriften für ein fünftes Residuum.

Elemente gleicher Konstruktion oder Funktion sind figuren-übergreifend mit den gleichen Bezugszeichen gekennzeichnet.

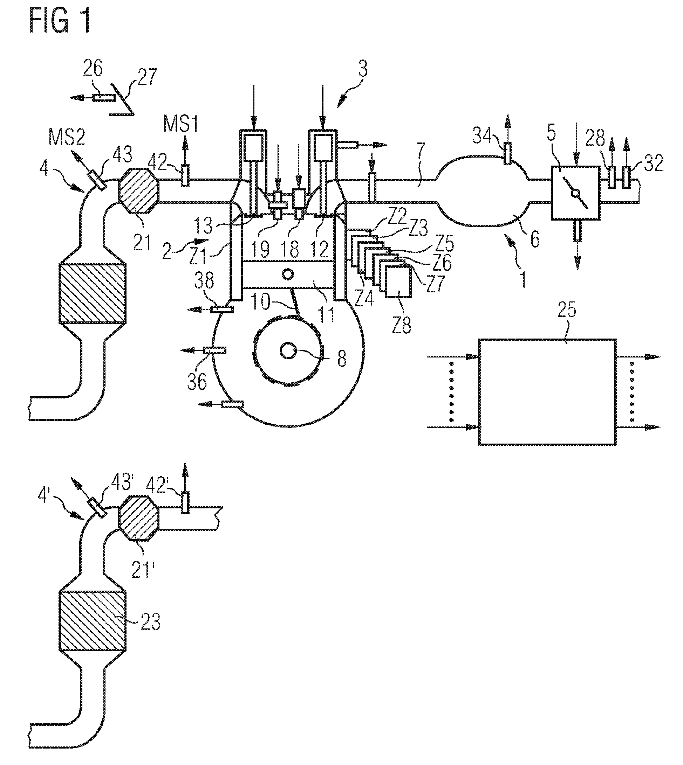

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 5, ferner einen Sammler 6 und ein Saugrohr 7, das hin zu einem Zylinder Z1 über einen Einlasskanal in den Motorblock 2 geführt ist. Der Motorblock 2 umfasst ferner eine Kurbelwelle 8, welche über eine Pleuelstange 10 mit dem Kolben 11 des Zylinders Z1 gekoppelt ist.

Der Zylinderkopf 3 umfasst einen Ventiltrieb mit einem Gaseinlassventil 12 und einem Gasauslassventil 13.

Der Zylinderkopf 3 umfasst ferner ein Einspritzventil 18 und eine Zündkerze 19. Alternativ kann das Einspritzventil 18 auch in dem Saugrohr 7 angeordnet sein. Das Einspritzventil 18 ist Teil eines Einspritzsystems, das auch noch eine Kraftstoffzuführeinrichtung umfasst und eine Ansteuerung für das Einspritzventil und bevorzugt auch eine Kraftstoffpumpe. Die Zündkerze 19 ist Teil eines Zündsystems, das auch noch eine Ansteuerung für die Zündkerze 19 umfasst.

In dem Abgastrakt 4 ist ein Abgaskatalysator angeordnet, der als Dreiwegekatalysator 21 ausgebildet ist. Ferner ist in dem Abgastrakt bevorzugt ein weiterer Abgaskatalysator angeordnet, der als NOx-Katalysator ausgebildet ist.

Die Brennkraftmaschine umfasst mehrere Zylinder Z1 - Z8, die in mindestens zwei Gruppen aufgeteilt sind, denen jeweils ein eigener Abgastrakt zugeordnet ist. Beispielsweise ist eine erste und eine zweite Gruppe an Zylindern Z1-Z8 vorgesehen, wobei der ersten Gruppe die Zylinder Z1-Z4 zugeordnet sind und der zweiten Gruppe die Zylinder Z5-Z8. Der ersten Gruppe ist der Abgastrakt 4 - im folgenden als erster Abgastrakt 4 bezeichnet - zugeordnet. Der zweiten Gruppe ist ein zweiter Abgastrakt 4' zugeordnet, der zu dem ersten Abgastrakt korrespondierend ausgebildet ist.

Eine Steuervorrichtung 25 ist vorgesehen, der Sensoren zugeordnet sind, die verschiedene Messgrößen erfassen und jeweils den Wert der Messgröße ermitteln. Betriebsgrößen umfassen neben den Messgrößen auch von diesen abgeleitete Größen. Die Steuervorrichtung 25 ermittelt abhängig von mindestens einer der Messgrößen Stellgrößen, die dann in ein oder mehrere Stellsignale zum Steuern der Stellglieder mittels entsprechender Stellantriebe umgesetzt werden. Die Steuervorrichtung 25 kann auch als Vorrichtung zum Steuern der Brennkraftmaschine oder als Vorrichtung zum Erkennen von Verbrennungsaussetzern bezeichnet werden.

Die Sensoren sind ein Pedalstellungsgeber 26, welcher eine Fahrpedalstellung eines Fahrpedals 27 erfasst, ein Luftmassensensor 28, welcher einen Luftmassenstrom stromaufwärts der Drosselklappe 5 erfasst, ein erster Temperatursensor 32, welcher eine Ansauglufttemperatur erfasst, ein Saugrohrdrucksensor 34, welcher einen Saugrohrdruck in dem Sammler 6 erfasst, ein Kurbelwellenwinkelsensor 36, welcher einen Kurbelwellenwinkel erfasst, dem dann eine Drehzahl N zugeordnet wird, ein zweiter Temperatursensor 38, der eine Kühlmitteltemperatur TCO erfasst.

Ferner ist eine erste Abgassonde 42 des ersten Abgastrakts 4 vorgesehen, die stromaufwärts oder in dem Dreiwegekatalysator 21 angeordnet ist und die einen Restsauerstoffgehalt des Abgases erfasst und deren Messsignal MS1 charakteristisch ist für das Luft/Kraftstoff-Verhältnis in dem Brennraum des bzw. der zugeordneten Zylinder Z1-Z4 und stromaufwärts der ersten Abgassonde 42 des ersten Abgastrakts 4 vor der Oxidation des Kraftstoffs, im folgenden bezeichnet als das Luft/Kraftstoff-Verhältnis in den zugeordneten Zylindern Z1-Z4. Im Falle der Anordnung in dem Dreiwegekatalysator 21 des ersten Abgastrakts 4 ist die erste Abgassonde 42 so in dem Dreiwegekatalysator 21 des ersten Abgastrakts 4 angeordnet, dass sich ein Teil des Katalysatorvolumens stromaufwärts der ersten Abgassonde 42 des ersten Abgastrakts 4 befindet.

Ferner ist eine zweite Abgassonde 43 des ersten Abgastrakts 4 vorgesehen, die stromabwärts des Dreiwegekatalysators 42 des ersten Abgastrakts 4 angeordnet ist und die einen Restsauerstoffgehalt des Abgases erfasst und deren Messsignal MS2 charakteristisch ist für das Luft/Kraftstoff-Verhältnis in dem Brennraum der zugeordneten Zylinder Z1-Z4 und stromaufwärts der zweiten Abgassonde 43 des ersten Abgastrakts 4 vor der Oxidation des Kraftstoffs, im folgenden bezeichnet als das Luft/Kraftstoff-Verhältnis stromabwärts des Abgaskatalysators des ersten Abgastrakts 4.

Die erste Abgassonde 42 des ersten Abgastrakts 4 ist bevorzugt eine lineare Lambdasonde. Die zweite Abgassonde 43 des ersten Abgastrakts 4 ist eine binäre Lambdasonde. Sie kann jedoch auch eine lineare Lambdasonde sein.

Entsprechende erste und zweite Abgassonden 42', 43' sind auch dem zweiten Abgastrakt 4' zugeordnet. Gleiches gilt für einen entsprechenden Dreiwegekatalysator 21'.

Je nach Ausführungsform der Erfindung kann eine beliebige Untermenge der genannten Sensoren vorhanden sein oder es können auch zusätzliche Sensoren vorhanden sein.

Die Stellglieder sind beispielsweise die Drosselklappe 5, die Gaseinlass- und Gasauslassventile 12, 13, das Einspritzventil 18 oder die Zündkerze 19.

Die Stellglieder und Sensoren sind insbesondere im Hinblick auf den Zylinder Z1 in der Figur 1 dargestellt. Den weiteren Zylindern sind bevorzugt auch noch entsprechende Stellglieder und ggf. Sensoren zugeordnet. Bevorzugt ist so jedem Zylinder ein Einspritzventil 18 und eine Zündkerze 19 zugeordnet.

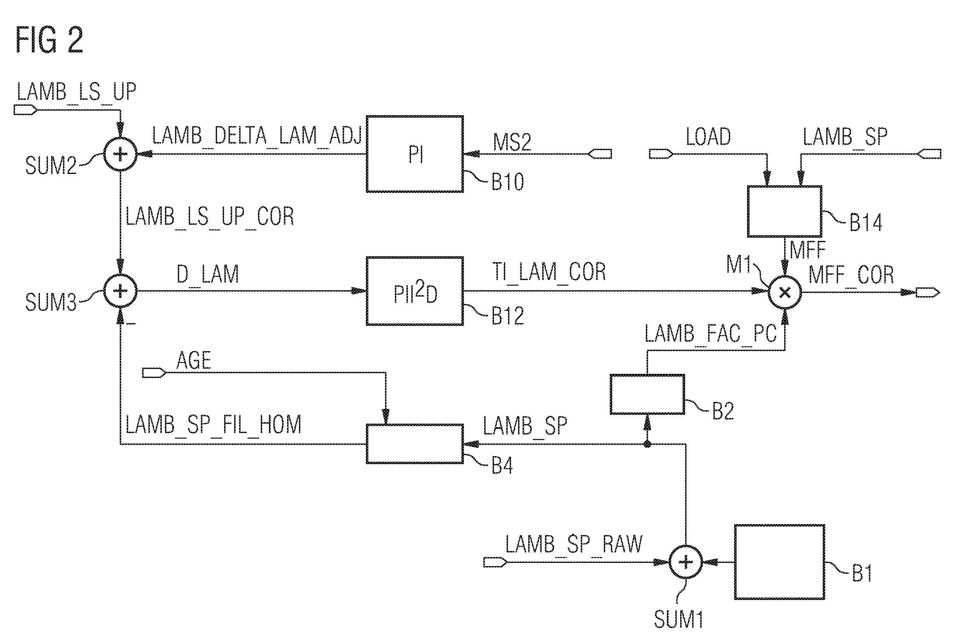

Ein Blockdiagramm eines Teils der Steuervorrichtung 25 ist in der Figur 2 dargestellt. Dabei bezieht sich der dargestellte Teil exemplarisch auf die erste Gruppe der Zylinder Z1-Z4. Bezüglich der zweiten oder möglicher weiterer Gruppen der Zylinder Z5-Z8 ist ebenfalls eine entsprechende Funktionalität in der Steuervorrichtung 25 ausgebildet.

Ein vorgegebenes Roh-Luft/Kraftstoff-Verhältnis LAMB_SP_RAW kann in einer besonders einfachen Ausgestaltung fest vorgegeben sein. Es wird jedoch bevorzugt beispielsweise abhängig von dem aktuellen Betriebsmodus der Brennkraftmaschine, wie einem Homogen- oder einem Schichtbetrieb und/oder abhängig von Betriebsgrößen der Brennkraftmaschine ermittelt.

In einem Block B1 wird eine Zwangsanregung ermittelt und in der ersten Summierstelle SUM1 mit dem vorgegebenen Roh-Luft/Kraftstoff-Verhältnis LAMB_SP_RAW summiert. Die Ausgangsgröße der Summierstelle ist dann ein vorgegebenes Luft/Kraftstoff-Verhältnis LAMB_SP der zugeordneten Zylinder Z1 bis Z4. Das vorgegebene Luft/Kraftstoff-Verhältnis LAMB_SP ist einem Block B2 zugeführt, der eine Vorsteuerung beinhaltet und einen Lambdavorsteuerfaktor LAMB_FAC_PC abhängig von dem vorgegebenen Luft/Kraftstoff-Verhältnis LAMB_SP erzeugt.

In einem Block B4 ist ein Filter ausgebildet, mittels dessen das vorgegebene Luft/Kraftstoff-Verhältnis LAMB_SP gefiltert wird und so ein vorgegebenes gefiltertes Luft/Kraftstoff-Verhältnis LAMB_SP_FIL_HOM erzeugt wird.

Das Filter ist ausgebildet das Verhalten der ersten Abgassonde 42 des ersten Abgastrakts 4 im Hinblick auf Gaslaufzeiten und ihr Ansprechverhalten zu approximieren. Dazu wird bevorzugt ein Sondenalterungsgrad AGE der ersten Abgassonde 42 berücksichtigt. Der Sondenalterungsgrad AGE wird durch Bewertung der Dämpfung der erfassten Lambdasignalamplitude, repräsentiert durch das Messsignal MS1, während einer Aufprägung einer erhöhten Zwangsanregungsamplitude ermittelt. Dabei wird bevorzugt die Drehzahl N und/oder die Last LOAD berücksichtigt.

In einem Block B10 ist ein Trimmregler ausgebildet, der bevorzugt als PI-Regler ausgebildet ist. Dem Trimmregler wird das Messsignal MS2 der zweiten Abgassonde 43 des ersten Abgastrakts 4 zugeführt. Seine Stellgröße - im folgenden als Trimmreglereingriff LAMB_DELTA_LAM_ADJ bezeichnet - ist ein Verschiebungswert für ein durch die erste Abgassonde 42 erfasstes Luft/Kraftstoff-Verhältnis LAMB_LS_UP in den zugeordneten Zylindern Z1 bis Z4, welches abhängig von dem Messsignal MS1 der ersten Abgassonde 42 ermittelt wird.

In der zweiten Summierstelle SUM2 wird die Summe des erfassten Luft/Kraftstoff-Verhältnisses LAMB_LS_UP und des Verschiebungswertes ermittelt und so ein korrigiertes erfasstes Luft/Kraftstoff-Verhältnis LAMB_LS_UP_COR ermittelt. Abhängig von dem vorgegebenen gefilterten Luft/Kraftstoff-Verhältnis LAMB_SP_FIL_HOM und dem korrigierten erfassten Luft/Kraftstoff-Verhältnis LAMB_LS_UP_COR wird in einer dritten Summierstelle SUM3 durch Bilden einer Differenz eine Regeldifferenz D_LAMB ermittelt, die Eingangsgröße des Block B12 ist.

Die Regeldifferenz D_LAMB wird bevorzugt durch Bilden der Differenz des Kehrwertes des vorgegebenen gefilterten Luft/Kraftstoff-Verhältnisses LAMB_SP_FIL_HOM und des Kehrwertes des korrigierten erfassten Luft/Kraftstoff-Verhältnisses LAMB_LS_UP_COR oder durch Bilden der Differenz des korrigierten erfassten Luft/Kraftstoff-Verhältnisses LAMB_LS_UP_COR und des vorgegebenen gefilterten Luft/Kraftstoff-Verhältnisses LAM_SP_FIL_HOM gebildet.

In dem Block B12 ist ein Lambda-Regler ausgebildet und zwar bevorzugt als PII²D-Regler. Die Stellgröße des Lambda-Reglers des Blocks B12 ist ein Lambdareglereingriff TI_LAM_COR.

Ferner ist ein Block B14 vorgesehen, in dem abhängig von einer Lastgröße LOAD und dem vorgegebenen Luft/Kraftstoff-Verhältnis LAMB_SP eine zuzumessende Kraftstoffmasse MFF ermittelt wird. Bevorzugt ist die Lastgröße LAMB_SP in diesem Fall eine in den jeweiligen Brennraum des jeweiligen zugeordneten Zylinders Z1-Z4 einströmende Luftmasse pro Arbeitsspiel. In der Multiplizierstelle M1 wird eine korrigierte zuzumessende Kraftstoffmasse MFF_COR durch Bilden des Produkts der zuzumessenden Kraftstoffmasse MFF, des Lambdavorsteuerfaktors LAMB_FAC_PC und des Lambdareglereingriffs TI_LAM_COR ermittelt. Das Einspritzventil 18 wird dann entsprechend zum Zumessen der korrigierten zuzumessenden Kraftstoffmasse MFF_COR angesteuert.

In einem verbrennungsaussetzerfreien Betrieb der Brennkraftmaschine ergibt sich eine geringe Regeldifferenz D_LAMB lediglich durch Bauteiltoleranzen und Fehler in der Prädiktion der Zylinderfüllung sowie der daraus abgeleiteten zuzumessenden Kraftstoffmasse MFF.

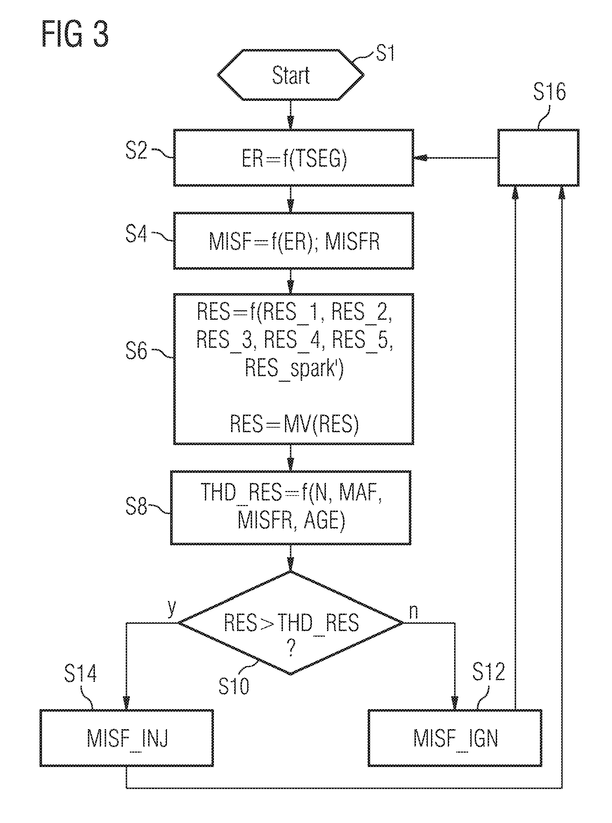

Zum Erkennen von Verbrennungsaussetzern ist in der Steuervorrichtung 25 ein Programm gespeichert und wird während des Betriebs abgearbeitet, das im Folgenden anhand des Ablaufdiagramms der Figur 3 erläutert ist. Das Programm wird in einem Schritt S1 gestartet, bevorzugt zeitnah zu einem Start der Brennkraftmaschine. In dem Schritt S1 können gegebenenfalls Variablen initialisiert werden.

In einem Schritt S2 wird eine Laufunruhe ER ermittelt. Dies erfolgt bevorzugt abhängig von einem Verlauf der Drehzahl N. Besonders bevorzugt werden dazu den einzelnen Zylindern Z1-Z4 zuordenbare Segmentzeitdauern TSEG ausgewertet. Eine Segmentzeitdauer TSEG korreliert zu einem Kurbelwellenwinkelbereich, der dem jeweiligen Zylinder Z1-Z8 zugeordnet ist und dessen Kurbelwellenwinkel abhängt von der Zylinderanzahl der Brennkraftmaschine und der Art der Brennkraftmaschine. Dieser Kurbelwellenwinkelbereich entspricht beispielsweise bei einer Brennkraftmaschine mit acht Zylindern Z1-Z8, die im Viertaktbetrieb betrieben wird, 90 Grad Kurbelwellenwinkel.

Die Laufunruhe ER kann beispielsweise ermittelt werden abhängig von einer Abweichung der dem jeweiligen Zylinder zugeordneten Segmentzeitdauer TSEG von einer mittleren Segmentzeitdauer.

In einem Schritt S4 wird dann auf einen Verbrennungsaussetzer MISF erkannt und zwar abhängig von der Laufunruhe. Dazu kann beispielsweise die Laufunruhe ER mit einem vorgebbaren Wert verglichen werden, dessen Überschreiten charakteristisch ist für den Verbrennungsaussetzer. Ferner wird in dem Schritt S4 eine Verbrennungsaussetzerrate MISFR ermittelt. Dies kann beispielsweise dadurch erfolgen, dass bei aufeinander folgenden Durchläufen der Schritte S4 die in vorangegangenen Durchläufen erkannten Verbrennungsaussetzer MISF in das Verhältnis zu der während des betrachteten Zeitraums gesamten Anzahl an Durchläufen des Schrittes S4 gesetzt werden.

Die folgenden Schritte werden bevorzugt nur abgearbeitet, wenn in dem Schritt S4 ein Verbrennungsaussetzer MISF erkannt wurde.

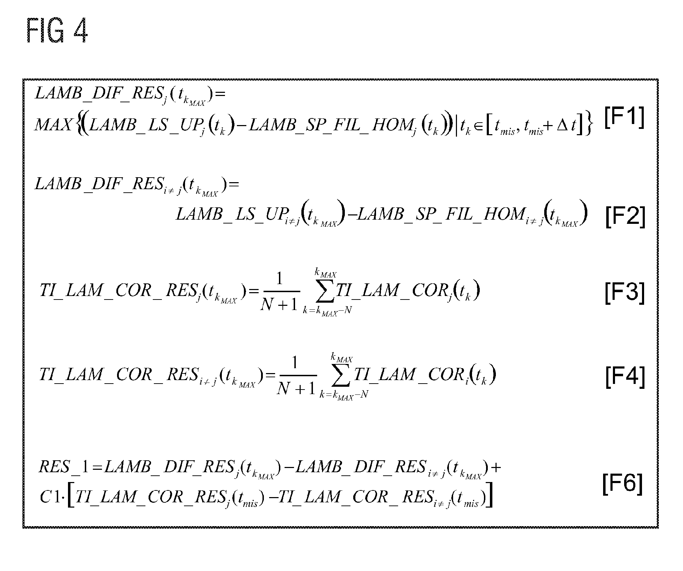

In einem Schritt S6 wird ein Gesamtresiduum RES abhängig von ersten bis fünften Residuen RES_1 bis RES_5 und abhängig von einem Zündresiduum RES_spark' ermittelt. Es kann auch abhängig von einer beliebigen Untermenge der ersten bis vierten Residuen RES_1 bis RES_5 und des Zündresiduums RES_spark', die das erste Residuum RES_1 umfasst, ermittelt werden. Das Gesamtresiduum RES ist ein Maß für eine Fehlerursache für den in dem Schritt S4 erkannten Verbrennungsaussetzer MISF in einem der Zylinder Z1 bis Z8. Abhängig von dem Gesamtresiduum kann auf eine Fehlerursache an dem Einspritzsystem der Brennkraftmaschine oder an dem Zündsystem geschlossen werden. Das Gesamtresiduum RES kann durch multiplikative und/oder additive Verknüpfung der einzelnen Residuen RES_1 bis RES_5, RES_spark', gegebenenfalls unter Berücksichtigung unterschiedlicher Wichtungen der einzelnen Residuen RES_1 bis RES_5, RES_spark' ermittelt werden. Bevorzugt wird das Gesamtresiduum RES durch gewichtete Addition der einzelnen Residuen RES_1 bis RES_5, RES_spark' ermittelt. Es ist jedoch auch möglich das Gesamtresiduum RES durch eine beliebige Kombination aus Additionen, was auch eine Subtraktion einschließt, und Multiplikationen, was auch eine Division einschließt, der einzelnen Residuen RES_1 bis RES_5, RES_spark' zu ermitteln, so zum Beispiel durch gewichtete Addition der ersten bis fünften Residuen RES_1 bis RES_5 und Multiplikation des sich daraus ergebenden Terms mit dem Zündresiduum RES_spark'. Auf die Ermittlung der einzelnen Residuen RES_1 bis RES_5, RES_spark' ist weiter unten anhand der Figuren 4 bis 10 näher eingegangen.

Das Gesamtresiduum RES wird jeweils bezogen auf denjenigen Zylinder Z1 bis Z8 ermittelt, bei dem in dem Schritt S4 ein Verbrennungsaussetzer erkannt wurde, wobei sich die Berechnungen der einzelnen Residuen RES_1 bis RES_5, RES_spark' dann auf die jeweilige Gruppe der Zylinder Z1 bis Z8 beziehen können, dem der eine Zylinder Z1 bis Z8 zugeordnet ist, bei dem der Verbrennungsaussetzer erkannt wurde.

Bevorzugt wird das Gesamtresiduum RES ferner durch Mittelwertbildung MV entsprechend ermittelter Gesamtresiduen RES und zwar einer vorgegebenen Anzahl dieser Gesamtresiduen RES ermittelt, wobei hierbei beispielsweise nach dem erstmaligen Erkennen eines Verbrennungsaussetzers in dem Schritt S4 eine vorgegebene Anzahl an nachfolgend ermittelten Gesamtresiduen RES herangezogen werden, die beispielsweise für jedes Arbeitsspiel mit erkanntem Verbrennungsaussetzer MISF desjenigen Zylinders ermittelt werden, bei dem ursprünglich der Verbrennungsaussetzer erkannt wurde. So kann beispielsweise diese Anzahl mit zehn vorgegeben sein. Sie kann jedoch vorteilhaft auch abhängen von der Drehzahl N und/oder einer Lastgröße, die beispielsweise die der Luftmassenstrom MAF in die Zylinder Z1 bis Z8 der Brennkraftmaschine oder der Saugrohrdruck sein kann. Alternativ kann die Ermittlung auch über eine vorgegebene Zeitdauer erfolgen, die bevorzugt abhängt von der Drehzahl N und/oder der Lastgröße LOAD.

In einem Schritt S8 wird ein Diagnoseschwellenwert THD_RES ermittelt, und zwar bevorzugt abhängig von der Drehzahl N und/oder dem Luftmassenstrom MAF und/oder der Verbrennungsaussetzerrate MISFR und/oder einem Alterungsgrad AGE der Abgassonde 42. Dazu können beispielsweise ein oder mehrere Kennfelder vorgesehen sein, die vorab durch Versuche, beispielsweise an einem Motorprüfstand, oder beispielsweise auch durch Simulationen ermittelt wurden und zwar derart, dass bei Überschreiten des Diagnoseschwellenwerts THD_RES durch das Gesamtresiduum die Fehlerursache in dem Einspritzsystem liegt und andernfalls die Fehlerursache in dem Zündsystem liegt.

In einem Schritt S10 wird dann geprüft ob das Gesamtresiduum RES größer ist als der Diagnoseschwellenwert THD_RES. Ist dies nicht der Fall, so wird in einem Schritt S12 auf einen Fehler in dem Zündsystem erkannt, der als MISF_IGN bezeichnet ist. Ist dies jedoch der Fall, so wird in einem Schritt S14 auf einen Fehler in dem Einspritzsystem MISF_INJ erkannt. Anschließend wird die Bearbeitung in einem Schritt S16 fortgesetzt, in dem das Programm gegebenenfalls eine vorgebbare Wartezeitdauer oder einen vorgebbaren Kurbelwellenwinkel verharrt, bevor die Bearbeitung erneut in dem Schritt S2 fortgesetzt wird. Bei der Abarbeitung der Schritte S2 bis S16 ist bezüglich deren zeitlichen Ablauf auf jeden Fall sicherzustellen, dass die einzelnen Berechnungen häufig genug durchgeführt werden, um für jeden Zylinder der Brennkraftmaschine bei jedem Arbeitsspiel einen möglicherweise auftretenden Verbrennungsaussetzer MISF erkennen zu können. Darüber hinaus werden gegebenenfalls benötigte Messgrößen oder Betriebsgrößen auch parallel zum Ablauf der Schritte S2 bis S16 erfasst und gegebenenfalls zwischengespeichert. Darüber hinaus kann die Funktionalität gemäß dem Ablaufdiagramm der Figur 3 auch mehrfach in der Steuervorrichtung 25 vorhanden sein und so insbesondere für jede Gruppe der Zylinder Z1 bis Z8 oder auch individuell für einzelnen Zylinder Z1 bis Z8 vorhanden sein.

In der Figur 4 sind Berechnungsvorschriften zum Ermitteln des ersten Residuums RES_1 angegeben. Das Auftreten von Verbrennungsaussetzern in MISFR aufgrund eines Fehlers in dem Zündsystem der Brennkraftmaschine ist durch unverbranntes, zündfähiges Luft/Kraftstoff-Gemisch gekennzeichnet, welches während des jeweiligen Ausschiebetakts des jeweiligen Zylinders Z1 bis Z8 dem jeweils zugeordneten Abgastrakt 4, 4' paketförmig zugeführt wird. Die erste Abgassonde 42 kann dann das Luft/Kraftstoff-Gemisch des entsprechenden Abgaspaketes nicht vollständig in das chemische Gleichgewicht bringen. Aufgrund der von der Molekülgröße abhängigen Diffusionsgeschwindigkeiten in einer Diffusionsbarriere der ersten Abgassonde 42 ergibt sich bei einem tatsächlich stöchiometrischen Luft/Kraftstoff-Verhältnis in dem jeweiligen Zylinder dann ein durch die erste Abgassonde 42 erfasstes Luft/Kraftstoff-Verhältnis LAMB_LS_UP, das größer eins ist.

Verhindert demgegenüber tatsächlich ein Fehler des Einspritzsystems das Einbringen von Kraftstoff in einen der Zylinder Z1 bis Z8 oder ist das Einbringen des Kraftstoffs deutlich verringert, so wird ebenfalls ein entsprechender Verbrennungsaussetzer MISFR auftreten. Bei einer vollständig unterbleibenden Zumessung von Kraftstoff durch das jeweilige Einspritzventil 18, die auch als stuck closed bezeichnet wird, wird dem jeweiligen Abgastrakt 4, 4' durch den Ausschiebetakt die vorher angesaugte Luft zugeführt. In diesem Fall signalisiert die erste Abgassonde mit ihrem Messsignal MS1 ein durch die erste Abgassonde 42, 42' erfasstes Luft/Kraftstoff-Verhältnis in dem ihr zugeordneten Zylindern von deutlich größer als eins, also ein stark ausgemagertes Luft/Kraftstoff-Gemisch. Falls die Fehlerursache für den jeweiligen Verbrennungsaussetzer MISF auf das Einspritzsystem der Brennkraftmaschine zurückzuführen ist, so kann eine deutlich höhere dynamische Abweichung zwischen dem durch die erste Abgassonde 42 erfassten Luft/Kraftstoff-Verhältnis LAMB_LS_UP in den zugeordneten Zylindern von dem vorgegebenen gefilterten Luft/Kraftstoff-Verhältnis LAMB_SP_FIL_HOM in den zugeordneten Zylindern ausgegangen werden. Dies ist insbesondere bei eher niedrigen Verbrennungsaussetzerraten MISFR besonders ausgeprägt. Darüber hinaus wirkt sich ein Fehler in dem Einspritzsystem auch deutlich höher dynamisch aus auf den Lambdareglereingriff TI_LAM_COR im Vergleich zu einem Fehler in dem Zündsystem der Brennkraftmaschine.

In den folgenden Figuren 4 bis 6 bezeichnet ein Index j jeweils die Gruppe der Zylinder Z1 bis Z8, bei der jeweils bei der Abarbeitung des Schrittes S4 bei einem der Zylinder aus der jeweiligen Gruppe ein Verbrennungsaussetzer MISF in dem Schritt S4 erkannt wurde. Ein Index i bezeichnet eine davon abweichende Gruppe. Falls somit ein Verbrennungsaussetzer in dem Schritt S4 an dem Zylinder Z3 erkannt wurde, der der ersten Gruppe zugeordnet ist, so bezieht sich der Index j jeweils auf die erste Gruppe und der Index i im Falle von lediglich noch einer zweiten Gruppe auf die zweite Gruppe. Falls jedoch noch mehr als zwei Gruppen an Zylindern vorhanden sind kann i eine beliebige Gruppe abgesehen von in diesem Fall der ersten Gruppe bezeichnen, wobei dann in dieser Gruppe, die durch den Index i bezeichnet ist, an keinem der Zylinder ein Verbrennungsaussetzer aufgetreten ist. Zum einfacheren Verständnis wird im folgenden davon ausgegangen, dass der Verbrennungsaussetzer in einem der Zylinder der ersten Gruppe erkannt wurde, so z.B. dem Zylinder Z3. Selbstverständlich ist dies nur zur übersichtlicheren Erläuterung so gemacht und die entsprechend angepassten Vorschriften können auch herangezogen werden und zum Ermitteln entsprechender Residuen für den umgedrehten Fall, bei dem in einer anderen Gruppe, so zum Beispiel der zweiten Gruppe der Zylinder, der Verbrennungsaussetzer MISF in einem der dieser jeweiligen Gruppe dann zugeordneten Zylinder erkannt wurde.

tₘᵢₛ bezeichnet den Zeitpunkt der Detektion des jeweiligen Verbrennungsaussetzers MISFR, wobei es hierbei nicht auf die rechnerische Detektion sondern auf eine Korrelation zu dem tatsächlichen Auftreten des Verbrennungsaussetzers ankommt. Dies gilt auch für entsprechend andere nachfolgenden noch erläuterte Zeitpunkte. Δt ist eine vorgegebene Zeitdauer, beispielsweise entsprechend ca. 5 bis 10 Kurbelwellenumdrehungen bei der jeweiligen Drehzahl N. Eine Residuum-Regeldifferenz LAMB_DIF_RES wird entsprechend der Berechnungsvorschrift F1 ermittelt. Die Residuum-Regeldifferenz LAMB_DIF_RES entspricht einer maximalen Abweichung des durch die erste Abgassonde 42 erfassten Luft/Kraftstoff-Verhältnis LAMB_LS_UP in den zugeordneten Zylindern Z1 bis Z4 von dem vorgegebenen gefilterten Luft/Kraftstoff-Verhältnis LAMB_SP_FIL_HOM in den ebenfalls zugeordneten Zylindern Z1 bis Z4 und zwar über die Zeitdauer Δt beginnend mit dem Zeitpunkt tₘᵢₛ der Detektion des entsprechenden Verbrennungsaussetzers MISFR. Das durch die erste Abgassonde 42 erfasste Luft/Kraftstoff-Verhältnis in den zugeordneten Zylindern Z1 bis Z4 kann auch durch das korrigierte erfasste Luft/Kraftstoff-Verhältnis LAMB_LS_UP_COR in der Berechnungsvorschrift F1 ersetzt sein. Darüber hinaus ist es auch grundsätzlich möglich Kehrwerte der Terme der Berechnungsvorschrift F1 heranzuziehen. Ein kmax ist ein Index für denjenigen Zeitpunkt tₖₘₐₓ desjenigen Zeitpunktes, an dem die maximale Abweichung gemäß der Berechnungsvorschrift F1 erkannt wurde. Dies wird im Folgenden als Zeitpunkt der maximalen Lambdaabweichung bezeichnet.

Gemäß der Berechnungsvorschrift F2 wird ferner die Residuum-Regeldifferenz LAMB_DIF_RESᵢ für die zweite Gruppe der Zylinder Z5 bis Z8 ermittelt und zwar durch Bilden der Differenz des durch die erste Abgassonde 42' erfassten Luft/Kraftstoff-Verhältnis in den zugeordneten Zylindern Z5 bis Z8 und des vorgegebenen gefilterten Luft/Kraftstoff-Verhältnisses LAMB_SP_FIL_HOM in den zugeordneten Zylindern Z5 bis Z8 jeweils der zweiten Gruppe und zwar bezogen auf den Zeitpunkt tₖₘₐₓ der maximalen Lambdaabweichung. Auch bei der Berechnungsvorschrift F2 können entsprechend in der Berechnungsvorschrift F1 mögliche Anpassungen vorgenommen sein.

Gemäß einer Berechnungsvorschrift F3 wird ein Lambdareglereingriff-Residuum TI_LAM_COR_RESⱼ für die erste Gruppe der Zylinder Z1 bis Z4 ermittelt und stellt einen ersten Kennwert dar , während gemäß einer Berechnungsvorschrift F4 das entsprechende Lambdareglereingriff-Residuum TI_LAM_COR_RESᵢ für die zweite Gruppe der Zylinder Z5 bis Z8 ermittelt wird, was einen zweiten Kennwert darstellt.

Das erste Residuum RES_1 wird dann entsprechend einer Berechnungsvorschrift F6 durch Addition zweier Terme ermittelt. Der erste Term ist eine Differenz zwischen der Residuum-Regeldifferenz LAMB_DIF_RESⱼ der ersten Gruppe der Zylinder Z1 bis Z4 und der Residuum-Regeldifferenz LAMB_DIF_RESᵢ der zweiten Gruppe der Zylinder Z5 bis Z8. Der zweite Term ist eine mit einem Wichtungswert C1 gewichtete Differenz zwischen dem Lambdareglereingriff-Residuum TI_LAM_COR_RESⱼ der ersten Gruppe der Zylinder und dem Lambdareglereingriff-Residuum TI_LAM_COR_RESᵢ der zweiten Gruppe der Zylinder Z5 bis Z8.

Die Kombination der beiden Terme ist vorteilhaft, da bei hohen Verbrennungsaussetzerraten MISFR durch den Eingriff des Lambdareglers, der der jeweiligen Gruppe der Zylinder Z1 bis Z8 zugeordnet ist, bei der der Verbrennungsaussetzer oder die Verbrennungsaussetzer erkannt wurden, die Residuum-Regeldifferenz LAMB_DIF_RESⱼ auch der ersten Gruppe der Zylinder Z5 bis Z8 einen betragsmäßig geringen Wert einnimmt und somit eine Diagnose der Fehlerursache erschwert. Genau für diesen Fall einer hohen Verbrennungsaussetzerrate ist jedoch dann das Lambdareglereingriff-Residuum TI_LAM_COR_RESⱼ betragsmäßig entsprechend erhöht und trägt so bei zu einer höheren Diagnosesicherheit der Fehlerursache der Verbrennungsaussetzer.

Insbesondere in transientem Betrieb der Brennkraftmaschine kann es durch eine fehlerhafte Prädiktion der Lastgröße LOAD zu darauf zurückzuführenden Fehlern des jeweiligen Luft/Kraftstoff-Verhältnisse in den Brennräumen der entsprechenden Zylinder Z1 bis Z8 sowohl der ersten als auch der zweiten Gruppe kommen. Durch das Bilden der Differenzen der jeweiligen Residuum-Regeldifferenzen LAMB_DIF_RESⱼ. LAMB_DIF_RESᵢ und der Lambdareglereingriff-Residuen TI_LAM_COR_RESⱼ, TI_LAM_COR_RESᵢ lässt sich der daraus resultierende Fehler im wesentlichen eliminieren, da er bei beiden Gruppen in gleicher Weise auftritt.

Die Prädiktion der Lastgröße LOAD erfolgt regelmäßig mittels eines in der Motorsteuerung abgelegten physikalischen Modells des Ansaugtraktes 1, das auch als Saugrohrmodell bezeichnet wird. Es können so gemäß der Vorschriften zum Ermitteln des ersten Residuums RES_1 stationäre aber insbesondere auch transiente Ungenauigkeiten des Saugrohrmodells stark in ihrem Einfluss auf die Zuordnung der jeweiligen Fehlerursache des Verbrennungsaussetzers reduziert werden und so eine deutlich genauere Zuordnung der Fehlerursache ermöglichen unabhängig von Ungenauigkeiten beispielsweise des Saugrohrmodells.

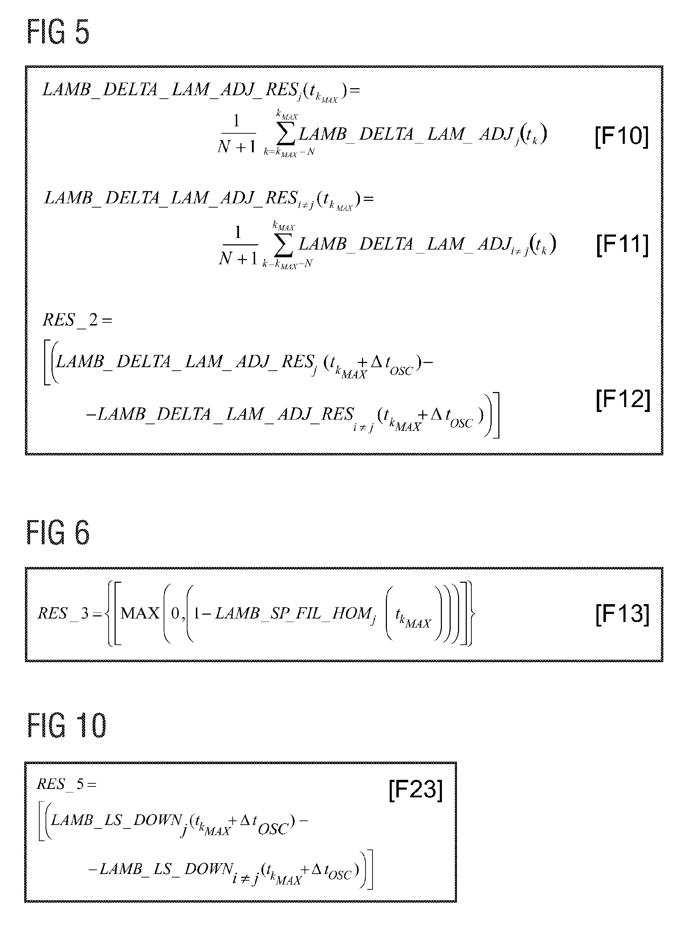

Anhand der Figur 5 sind die Berechnungsvorschriften zum Ermitteln des zweiten Residuums RES_2 näher erläutert, durch das der Einfluss des Trimmreglers im Falle eines erkannten Verbrennungsaussetzers MISF in einem der Zylinder der ersten Gruppe berücksichtigt wird.

Gemäß einer Berechnungsvorschrift F10 wird ein Trimmreglereingriff-Residuum LAMB_DELTA_LAM_ADJ_RES durch Bilden eines Mittelwertes der Trimmreglereingriffe LAMB_DELTA_LAM_ADJⱼ der ersten Gruppe der Zylinder Z1 bis Z4 und zwar über N+1 verschiedene Werte, die über N vorherige Abtastschritte gemittelt werden. Die Abtastschritte können beispielsweise größenordnungsmäßig 10 ms beabstandet sein. Die Mittelwertes der Trimmreglereingriffe LAM_DELTA_LAM_ADJⱼ stellen erste Trimmkennwerte dar.

Entsprechend wird mittels einer analogen Berechnungsvorschrift F11 ein Trimmreglereingriff-Residuum LAMB_DELTA_LAM_ADJ_RESᵢ für die zweite Gruppe der Zylinder Z5 bis Z8 ermittelt. Hierzu werden dann entsprechende Werte des Trimmreglereingriffs LAMB_DELTA_LAM_ADJᵢ der zweiten Gruppe der Zylinder Z5 bis Z8 herangezogen. Die Mittelwertes der Trimmreglereingriffe LAM_DELTA_LAM_ADJᵢ stellen zweite Trimmkennwerte dar.

Durch einen Verbrennungsaussetzer MISF in dem beispielhaft genannten dritten Zylinder, der der ersten Gruppe der Zylinder Z1 bis Z4 zugeordnet ist, welcher durch einen Fehler des Zündsystems verursacht wurde, gelangt der unverbrannte Kraftstoff in den jeweiligen Abgastrakt 4 und ebenso Sauerstoff. Dies führt dazu, dass das Messsignal MS1 der ersten Lambdasonde 42 repräsentativ ist für eine Ausmagerung des Abgases im Bereich der ersten Abgassonde 42. Die Lambdaregelung kompensiert dies durch ein Erhöhen des Lambdareglereingriffs TI_LAM_COR und somit einer Erhöhung der zuzumessenden korrigierten Kraftstoffmasse MFF_COR. Das unverbrannte Luft/Kraftstoff-Gemisch gelangt dann in den Abgaskatalysator, der als Dreiwege-Katalysator 21 ausgebildet ist und wird dort unter Ausräumung, des in dem Katalysator gespeicherten Sauerstoffs oxidiert. Dies hat zur Folge, dass das Messsignal MS2 der zweiten Abgassonde 43 in Richtung Fett verschoben wird. Der Trimmregler versucht dem durch Vermindern des Trimmreglereingriffs LAMB_DELTA_LAM_ADJ entgegenzuwirken.

Das zweite Residuum wird dann abhängig von den Trimmreglereingriff-Residuen LAMB-DELTA-LAM-ADJ-RESⱼ und LAMB_DELTA_LAM_ADJ_RESᵢ der ersten und zweiten Gruppe der Zylinder Z1 bis Z8 ermittelt, wie beispielsweise gemäß der Berechnungsvorschrift F12. Bevorzugt wird dazu jeweils eine Verzögerungszeitdauer Δt_{OSC} gegenüber dem Zeitpunkt tₖₘₐₓ berücksichtigt, der der maximalen Lambdaabweichung an der ersten Abgassonde 42 zugeordnet ist. Die Verzögerungszeitdauer Δt_{OSC} hängt bevorzugt ab von der Drehzahl N, der Luftmasse MAF, der Verbrennungsaussetzerrate MISFR, der Sauerstoffspeicherfähigkeit des Abgaskatalysators, der Monolithtemperatur des Abgaskatalysators 21 und dem gegenwärtigen Sauerstoff-Beladungsgrad des Abgaskatalysators 21.

Im Falle eines Verbrennungsaussetzers MISF, der durch einen Fehler in dem Zündsystem bedingt ist, kann durch das zweite Residuum RES_2 das Gesamtresiduum RES vermindert werden und somit eine Diagnosesicherheit erhöht werden, da ein geringeres Gesamtresiduum RES charakteristisch ist für einen Fehler in dem Zündsystem.

Bei Betrieb der Brennkraftmaschine mit einem vorgegebenen Luft/Kraftstoff-Verhältnis LAMB_SP in den zugeordneten Zylindern Z1 bis Z4, das angefettet ist im Vergleich zu einem stöchiometrischen Wert, was zum Beispiel erfolgt in einem Betrieb der Volllast oder der Katalysatorschutz-Anfettung, nimmt eine charakteristische Änderung der Residuum-Regeldifferenz LAMB_DIF_RES ab, wenn Verbrennungsaussetzer auftreten. Ohne eine Korrektur ist somit dann nur noch eine geringere Sicherheit bei der Zuordnung der Fehlerursache anhand des Vergleichs mit dem Diagnoseschwellenwert THD_RES in dem Schritt S10 (Figur 3) gegeben.

Durch ein Berücksichtigen des dritten Residuums RES_3, das abhängt von dem vorgegebenen gefilterten Luft/Kraftstoff-Verhältnis LAMB_SP_FIL_HOMⱼ zum Zeitpunkt tₖₘₐₓ der maximalen Lambdaabweichung kann in diesen Fällen der Volllast oder der Katalysatorschutz-Anfettung eine deutlich zuverlässigere Zuordnung der Fehlerursache erfolgen.

Bezüglich des vierten Residuums RES_4 und des Zündresiduums RES_spark' und der zu ihrer Bestimmung im Folgenden näher erläuterten Berechnungsvorschriften F16 bis F22 steht der Index i für denjenigen Zylinder, für den bei der Abarbeitung des Schrittes S4 der Verbrennungsaussetzer MISF erkannt wurde, während der Index j für andere Zylinder bezeichnend ist, die gegebenenfalls auch der gleichen Gruppe oder auch einer beliebigen anderen Gruppe der Zylinder Z1 bis Z8 zugeordnet sein können.

Durch das Berücksichtigen des vierten Residuums RES_4 kann die Sicherheit bei dem Erkennen der Fehlerursache des Verbrennungsaussetzers MISF dann erhöht werden, wenn der jeweilige Verbrennungsaussetzer MISF durch eine verringerte Einspritzmenge verursacht ist, die auch als Low-Flow bezeichnet ist. Gemäß einer Berechnungsvorschrift F16 wird jeweils eine mittlere zylinderspezifische Laufunruhe ERR_CYL_mmv ermittelt durch Mitteln von zylinderspezifischen Laufunruhen ER_CYL über eine vorgegebene Anzahl an N Abtastschritten. Die Anzahl N an Abtastschritten kann beispielsweise 100 betragen. Die einzelnen Abtastschritte können beispielsweise in der Größenordnung von 10 ms beabstandet sein. Es sollte sichergestellt sein, dass pro Arbeitsspiel mindestens je eine zylinderspezifische Laufunruhe pro Zylinder Z1 - Z8 ermittelt wird. Der Index 1 ist hier ein Platzhalter für einen beliebigen Zylinder Z1 bis Z8. t_{kcalc} kann ein beliebiger Zeitpunkt sein, er kann jedoch auch korrelieren mit dem Zeitpunkt tₖₘₐₓ, der der maximalen Lambdaabweichung zugeordnet ist. Bevorzugt kann das Ermitteln der mittleren zylinderspezifischen Laufunruhe ER_CYL_mmv auch durch eine gleitende Mittelwertbildung erfolgen.

Ein Laufunruhe-Residuum RES_ER_i wird für den jeweiligen Zylinder Z1 bis Z8 gemäß der Berechnungsvorschrift F17 ermittelt. M bezeichnet hierbei die Zylinderanzahl einschließlich desjenigen Zylinders, an dem bei der Abarbeitung des Schrittes S4 der Verbrennungsaussetzer MISF erkannt wurde. M kann beispielsweise der Gesamtanzahl der Zylinder Z1 bis Z8 der Brennkraftmaschine entsprechen. Durch die Berechnungsvorschrift gemäß F17 wird die Abweichung der mittleren zylinderspezifischen Laufunruhe ER_CYL_mmvᵢ desjenigen Zylinders, bei dem ein Verbrennungsaussetzer MISF erkannt wurde, von einer über die Anzahl M-1 der anderen Zylinder gemittelten mittleren jeweiligen zylinderspezifischen Laufunruhe in Bezug gesetzt zu einem Laufunruheschwellenwert THD_ER und der über die Anzahl M-1 der anderen Zylinder gemittelten mittleren zylinderspezifischen Laufunruhe. Auf diese Weise erfolgt somit eine Skalierung. Durch die Abhängigkeit des Laufunruheschwellenwertes THD_ER von dem Zeitpunkt t_{kcalc} kann implizit eine Abhängigkeit von der Drehzahl N und/oder einer Lastgröße gegeben sein. Der Laufunruheschwellenwertes THD_ER kann jedoch auch direkt abhängen von der Drehzahl N und/oder einer Lastgröße. Durch den Nenner der Berechnungsvorschrift F17 ist eine Skalierung des Zählers der Berechnungsvorschrift F17 gewährleistet und zwar dergestalt, dass der Wert null des Laufunruhe-Residuum RES_ER_i dem gewünschten Verhalten der Laufunruhe entspricht, während bei Werten von etwa eins bereits häufige Verbrennungsaussetzer auftreten. Durch diese Skalierung wird der Einfluss von Lastgrößen und der Drehzahl N auf das vierte Residuum RES_4 deutlich vermindert.

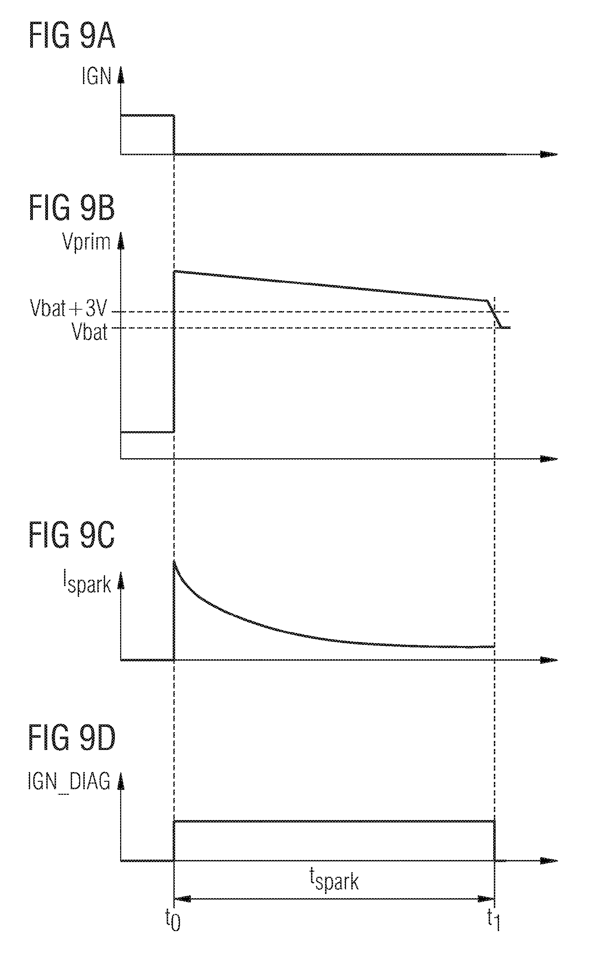

Das vierte Residuum RES_4 wird durch Multiplikation des jeweiligen Laufunruhe-Residuums RES_ER_i mit einem Laufunruhe-Wichtungswert F_ER ermittelt, der bevorzugt von der Drehzahl N, der Luftmasse MAF und der Verbrennungsaussetzerrate MISFR abhängt, die dem entsprechenden Zylinder Z1 bis Z8 zugeordnet ist. Beispielsweise ist der Laufunruhe-Wichtungswert F_ER durch die Berechnungsvorschrift F18 gegeben, wobei C_ER einen vorgegebenen Grundwichtungswert bezeichnet.
Mittels des Zündresiduums RES_spark' können insbesondere in niedrigen Last- und/oder Drehzahlbereichen Verbrennungsaussetzer MISF besonders zuverlässig in ihrer Fehlerursache diagnostiziert werden, wenn sie dem Zündsystem der Brennkraftmaschine zuzuordnen sind. Anhand der Figuren 9A bis 9D sind im Folgenden kurz Signalverläufe im Zusammenhang mit einer Ansteuerung einer Zündkerze erläutert. Zu einem Zeitpunkt t₀ wird ein Ladestrom einer Zündspule der Zündkerze 19 durch Ansteuerung eines dazu vorgesehen IGBTs (insulated gate bipolar transistor) abgeschaltet, dies ist anhand des Verlaufs von IGN in der Figur 9a ersichtlich. Durch eine Selbstinduktion der Zündspule baut sich anschließend an einer Sekundärseite eine Zündspannung auf. Der Spannungsaufbau erfolgt bis zu einem Einsetzen eines Überschlages an der Funkenstrecke der Zündkerze 19. VPRIM bezeichnet die Spannung der Primärseite. VBAT bezeichnet eine Versorgungsspannung, insbesondere eine Batteriespannung. Iₛₚₐᵣₖ bezeichnet einen sekundärseitigen Strom. Durch Selbstinduktion der Zündspule baut sich an der Sekundärseite die Zündspannung auf. Der Spannungsaufbau erfolgt bis zum Einsetzen des Überschlages an der Funkenstrecke der Zündkerze. Bis zum Erlöschen des Zündfunkens zu einem Zeitpunkt t₁ fließt der sekundärseitige Strom Iₛₚₐᵣₖ. Dieser Stromfluss führt über Induktion zu einer erhöhten Spannung auf der Primärseite. Die Funkenbrenndauer tₛₚₐᵣₖ ist die Zeitdauer, während der die primärseitige Spannung einen Schwellenwert, zum Beispiel die Versorgungsspannung plus drei Volt, überschreitet. Eine Information über das Erfülltsein dieser Bedingungen wird durch ein Signal IGN_DIAG der Steuervorrichtung 25 zur Verfügung gestellt. Das Signal IGN_DIAG wird entsprechend für alle Zündkerzen aller Zylinder Z1 bis Z8 erzeugt.

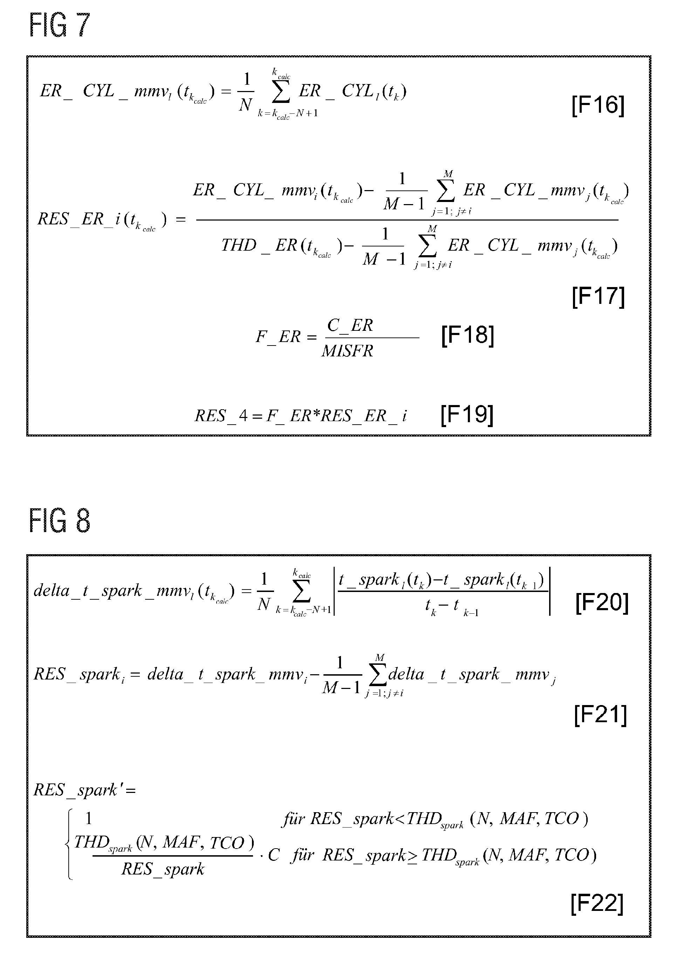

Eine mittlere Zündfunkenbrenndauer-Fluktuation delta_t_spark_mmv wird mittels einer Berechnungsvorschrift F20 (Figur 8) ermittelt und zwar bevorzugt für alle Zylinder Brennkraftmaschine. Da eine hohe Abweichung der mittleren Zündfunkenbrenndauer-Fluktuation delta_t_spark_mmv eines Zylinders vom Mittelwert der Fluktuationen der mittleren Zündfunkenbrenndauer-Fluktuationen delta_t_spark_mmv charakteristisch ist für einen Fehler des Zündsystems, der sich auf den einen Zylinder Z1 bis Z8 auswirkt, wird ein Grund-Zündresiduum RES_sparkᵢ mittels einer Berechnungsvorschrift F21 ermittelt. Das Ermitteln des Grund-Zündresiduums RES_sparkᵢ kann unabhängig von einem Auftreten von Verbrennungsaussetzern grundsätzlich zu einem beliebigen Zeitpunkt t_{kcalc} erfolgen, es kann jedoch beispielweise zeitlich korrelieren zu dem Zeitpunkt tₖₘₐₓ erfolgen, der der maximalen Lambdaabweichung zugeordnet ist.

Das Zündresiduum RES_spark' wird entsprechend der Berechnungsvorschrift F22 ermittelt. Es wird somit mit einem Wert eins belegt, wenn das Grund-Zündresiduum RES_spark kleiner ist als ein vorgegebener Brenndauerschwellenwert THDₛₚₐᵣₖ. Der Brenndauerschwellenwert THDₛₚₐᵣₖ wird bevorzugt abhängig von der Drehzahl N und/oder einem Luftmassenstrom MAF und/oder der Kühlmitteltemperatur TCO ermittelt. Er wird andererseits aus dem Quotienten des Brenndauerschwellenwerts THDₛₚₐᵣₖ und des Grund-Zündresiduums RES_spark ermittelt, falls das Grund-Zündresiduum RES_spark größer oder gleich ist dem Brenndauerschwellenwert THDₛₚₐᵣₖ. Bevorzugt wird dann das Zündresiduum RES_spark' multiplikativ beim Ermitteln des Gesamtresiduums RES berücksichtigt und zwar bevorzugt derart, dass abhängig von den übrigen verwendeten Residuen RES_1 bis RES_5 ein Zwischenwert ermittelt wird und dieser dann mit dem Zündresiduum RES_SPARK' multipliziert wird. Durch das Berücksichtigen der Kühlmitteltemperatur, beim Ermitteln des Brenndauerschwellenwertes THDₛₚₐᵣₖ kann berücksichtigt werden, dass die Kühlmitteltemperatur repräsentativ ist in vorgegebenen Betriebszuständen für eine Temperatur der Zündspulen, die sich dann in einem geänderten Verbrennungsaussetzerverhalten äußert bei einer etwas schadhaften Zündspule.

Das fünfte Residuum RES_5 wird abhängig von dem durch die zweite Abgassonde 43 erfassten Luft/Kraftstoff-Verhältnis LAMB_LS_DOWNⱼ stromabwärts des Abgaskatalysators bezüglich der ersten Gruppe der Zylinder Z1-Z4 und von dem durch die zweite Abgassonde 43' erfassten Luft/Kraftstoff-Verhältnis LAMB_LS_DOWNᵢ stromabwärts des Abgaskatalysators bezüglich der zweiten Gruppe der Zylinder Z1-Z4, ermittelt, wie beispielsweise gemäß der Berechnungsvorschrift F23. Bevorzugt wird dazu jeweils die Verzögerungszeitdauer Δt_{OSC} gegenüber dem Zeitpunkt tₖₘₐₓ berücksichtigt, der der maximalen Lambdaabweichung an der ersten Abgassonde 42 zugeordnet ist. Das fünfte Residuum RES_5 hat gegenüber dem zweiten Residuum RES_2 den Vorteil, dass zu seiner Berechnung durchgehend während des Betriebs der Brennkraftmaschine aktuelle Messwerte zur Verfügung stehen, auch im transienten Betrieb der Brennkraftmaschine, in dem häufig der Trimmregler deaktiviert wird und somit der Trimmreglereingriff seinen Wert nicht weiter verändern kann. Darüber zeichnet sich das fünfte Residuum RES_5 durch einen hohen Signalhub aus.

## Patentansprüche

1. Verfahren zum Erkennen eines Verbrennungsaussetzers (MISF) in einem Brennraum eines Zylinders (Z1 bis Z8) einer Brennkraftmaschine mit mehreren Zylindern (Z1 bis Z8), die in mindestens zwei Gruppen jeweils einem Abgastrakt (4) zugeordnet sind, wobei in jedem Abgastrakt (4, 4') ein Abgaskatalysator (21, 21') und stromaufwärts des Abgaskatalysators eine Abgassonde (42, 42') angeordnet sind, bei dem
- ein Verbrennungsaussetzer (MISF) in einem Zylinder (Z1 bis Z8) erkannt wird, abhängig von mindestens einer Betriebsgröße der Brennkraftmaschine, und einer der Gruppen der Zylinder (Z1 bis Z8) zugeordnet wird,
- eine Fehlerursache für den Verbrennungsaussetzer (MISF) ermittelt wird, die an einem Einspritzsystem der Brennkraftmaschine oder an einem Zündsystem der Brennkraftmaschine liegt, abhängig von einer ersten Regeldifferenz (D_LAMB) einer Lambdaregelung, die der Gruppe der Zylinder (Z1 bis Z8) zugeordnet ist, der der Verbrennungsaussetzer (MISF) zugeordnet ist, und ferner abhängig von einer zweiten Regeldifferenz (D_LAMB) einer weiteren Lambdaregelung, die einer Gruppe der Zylinder zugeordnet ist, der der Verbrennungsaussetzer (MISF) nicht zugeordnet ist.

2. Verfahren nach Anspruch 1, bei dem die Fehlerursache für den Verbrennungsaussetzer (MISF) ermittelt wird abhängig von einem ersten Kennwert, der abhängig von der Stellgröße der Lambdaregelung ermittelt wird, die der Gruppe der Zylinder (Z1 bis Z8) zugeordnet ist, der der Verbrennungsaussetzer (MISF) zugeordnet ist, und die ferner abhängig von einem zweiten Kennwert ermittelt wird, der abhängig von der Stellgröße der Lambdaregelung ermittelt wird, die einer Gruppe der Zylinder zugeordnet ist, der der Verbrennungsaussetzer (MISF) nicht zugeordnet ist.

3. Verfahren zum Erkennen eines Verbrennungsaussetzers (MISF) in einem Brennraum eines Zylinders (Z1 bis Z8) einer Brennkraftmaschine mit mehreren Zylindern (Z1 bis Z8), die in mindestens zwei Gruppen jeweils einem Abgastrakt (4) zugeordnet sind, wobei in jedem Abgastrakt (4, 4') ein Abgaskatalysator (21, 21') und stromaufwärts des Abgaskatalysators eine Abgassonde (42, 42') angeordnet sind, bei dem
- ein Verbrennungsaussetzer (MISF) in einem Zylinder (Z1 bis Z8) erkannt wird, abhängig von mindestens einer Betriebsgröße der Brennkraftmaschine, und einer der Gruppen der Zylinder (Z1 bis Z8) zugeordnet wird,
- eine Fehlerursache für den Verbrennungsaussetzer (MISF) ermittelt wird, die an einem Einspritzsystem der Brennkraftmaschine oder an einem Zündsystem der Brennkraftmaschine liegt, abhängig von einem ersten Kennwert, der abhängig von der Stellgröße der Lambdaregelung ermittelt wird, die der Gruppe der Zylinder (Z1 bis Z8) zugeordnet ist, der der Verbrennungsaussetzer (MISF) zugeordnet ist, und die ferner abhängig von einem zweiten Kennwert ermittelt wird, der abhängig von der Stellgröße der Lambdaregelung ermittelt wird, die einer Gruppe der Zylinder zugeordnet ist, der der Verbrennungsaussetzer (MISF) nicht zugeordnet ist.

4. Verfahren nach einem der Ansprüche 2 oder 3, bei dem der erste beziehungsweise der zweite Kennwert derart ermittelt werden, dass sie repräsentativ sind für einen Integralanteil der Stellgröße der jeweiligen Lambdaregelung.

5. Verfahren nach Anspruch 4 bei dem der erste beziehungsweise zweite Kennwert durch Mittelwertbildung der Stellgröße der jeweiligen Lambdaregelung ermittelt werden.

6. Verfahren nach einem der vorstehenden Ansprüche, bei dem die Fehlerursache ermittelt wird abhängig von einem ersten Trimmkennwert, der abhängig von einer Stellgröße eines Trimmreglers ermittelt wird, der der Gruppe der Zylinder (Z1 bis Z8) zugeordnet ist, der der Verbrennungsaussetzer (MISF) zugeordnet ist, und ferner abhängig von einem zweiten Trimmkennwert, der abhängig von einer Stellgröße eines weiteren Trimmreglers ermittelt wird, der der Gruppe der Zylinder (Z1 bis Z8) zugeordnet ist, der der Verbrennungsaussetzer (MISF) nicht zugeordnet ist.

7. Verfahren nach einem der vorstehenden Ansprüche, bei dem die Fehlerursache ermittelt wird abhängig von einem Sollwert des Luft/Kraftstoff-Verhältnisses, der der Gruppe der Zylinder (Z1 bis Z8) zugeordnet ist, der der Verbrennungsaussetzer (MISF) zugeordnet ist.

8. Verfahren nach einem der vorstehenden Ansprüche, bei dem die Fehlerursache ermittelt wird abhängig von einem zylinderspezifischen Laufunruhewert (ER_CYL), der dem Zylinder (Z1 bis Z8) zugeordnet ist, bei dem der Verbrennungsaussetzer (MISF) erkannt wurde, und abhängig von weiteren zylinderspezifischen Laufunruhewerten (ER_CYL), die anderen Zylindern zugeordnet sind.

9. Verfahren nach einem der vorstehenden Ansprüche, bei dem die Fehlerursache ermittelt wird abhängig von einer zylinderspezifischen Funkenbrenndauer (t_spark) einer zugeordneten Zündkerze (19), die dem Zylinder (Z1 bis Z8) zugeordnet ist, bei dem der Verbrennungsaussetzer (MISF) erkannt wurde, und abhängig von weiteren zylinderspezifischen Funkenbrenndauern (t_spark) anderer Zündkerzen, die anderen Zylindern (Z1 bis Z8 zugeordnet sind.

10. Verfahren nach einem der vorstehenden Ansprüche, bei dem die Fehlerursache durch Auswerten einer Mehrzahl an erkannten Verbrennungsaussetzern (MISF) ermittelt wird, die der Gruppe der Zylinder (Z1 bis Z8) zugeordnet ist, der der Verbrennungsaussetzer zugeordnet ist.

11. Verfahren nach Anspruch 10, bei dem eine Anzahl der Mehrzahl an erkannten Verbrennungsaussetzern (MISF) abhängt von einer Drehzahl (N) und/oder einer Lastgröße (LOAD).

12. Verfahren nach Anspruch 10, bei dem die Auswertung der Mehrzahl an erkannten Verbrennungsaussetzern (MISF) erfolgt, die während einer vorgegebenen Zeitdauer erkannt wurden.

13. Verfahren nach Anspruch 12, bei dem die Zeitdauer abhängt von der Drehzahl (N) und/oder einer Lastgröße (LOAD).

14. Verfahren nach einem der vorstehenden Ansprüche, bei dem die Fehlerursache ermittelt wird abhängig von einer Verbrennungsaussetzerrate (MISFR) eines jeweiligen Zylinders (Z1 bis Z8), der der Gruppe der Zylinder (Z1 bis Z8) zugeordnet ist, der der Verbrennungsaussetzer (MISF) zugeordnet ist und/oder einer Sondenalterung der stromaufwärts des Abgaskatalysators angeordneten Abgassonde (42), die der Gruppe der Zylinder (Z1 bis Z8) zugeordnet ist, der der Verbrennungsaussetzer (MISF) zugeordnet ist.

15. Vorrichtung zum Erkennen eines Verbrennungsaussetzers (MISF) in einem Brennraum eines Zylinders (Z1 bis Z8) einer Brennkraftmaschine mit mehreren Zylindern (Z1 bis Z8), die in mindestens zwei Gruppen jeweils einem Abgastrakt (4) zugeordnet sind, wobei in jedem Abgastrakt (4, 4') ein Abgaskatalysator (21, 21') und stromaufwärts des Abgaskatalysators eine Abgassonde (42, 42') angeordnet sind, wobei die Vorrichtung ausgebildet ist zum
- Erkennen eines Verbrennungsaussetzers (MISF) in einem Zylinder (Z1 bis Z8), abhängig von mindestens einer Betriebsgröße der Brennkraftmaschine, und Zuordnen einer der Gruppen der Zylinder (Z1 bis Z8),
- Ermitteln einer Fehlerursache für den Verbrennungsaussetzer (MISF), die an einem Einspritzsystem der Brennkraftmaschine oder an einem Zündsystem der Brennkraftmaschine liegt, abhängig von einer ersten Regeldifferenz (D_LAMB) einer Lambdaregelung, die der Gruppe der Zylinder (Z1 bis Z8) zugeordnet ist, der der Verbrennungsaussetzer (MISF) zugeordnet ist, und ferner abhängig von einer zweiten Regeldifferenz (D_LAMB) einer weiteren Lambdaregelung, die einer Gruppe der Zylinder zugeordnet ist, der der Verbrennungsaussetzer (MISF) nicht zugeordnet ist.

16. Vorrichtung zum Erkennen eines Verbrennungsaussetzers (MISF) in einem Brennraum eines Zylinders (Z1 bis Z8) einer Brennkraftmaschine mit mehreren Zylindern (Z1 bis Z8), die in mindestens zwei Gruppen jeweils einem Abgastrakt (4) zugeordnet sind, wobei in jedem Abgastrakt (4, 4') ein Abgaskatalysator (21, 21') und stromaufwärts des Abgaskatalysators eine Abgassonde (42, 42') angeordnet sind, wobei die Vorrichtung ausgebildet ist zum
- Erkennen eines Verbrennungsaussetzers (MISF) in einem Zylinder (Z1 bis Z8), abhängig von mindestens einer Betriebsgröße der Brennkraftmaschine, und Zuordnen einer der Gruppen der Zylinder (Z1 bis Z8),
- Ermitteln einer Fehlerursache für den Verbrennungsaussetzer (MISF), die an einem Einspritzsystem der Brennkraftmaschine oder an einem Zündsystem der Brennkraftmaschine liegt, abhängig von einem ersten Kennwert, der abhängig von der Stellgröße der Lambdaregelung ermittelt wird, die der Gruppe der Zylinder (Z1 bis Z8) zugeordnet ist, der der Verbrennungsaussetzer (MISF) zugeordnet ist, und die ferner abhängig von einem zweiten Kennwert ermittelt wird, der abhängig von der Stellgröße der Lambdaregelung ermittelt wird, die einer Gruppe der Zylinder zugeordnet ist, der der Verbrennungsaussetzer (MISF) nicht zugeordnet ist.
